# EUROPEAN PATENT APPLICATION

(11) **EP 4 628 402 A1**
(43) Date of publication of application: **08.10.2025**
(21) Application number: 25161482.2
(22) Date of filing: 04.03.2025
(51) Int. Cl.: B64C 7/02, B64D 15/04

(54) **COOLING OF GAS FLOWING OVER AIRCRAFT STRUCTURE**

(30) Priority: 27.03.2024 IN 202411024864
(71) Applicant: Airbus (S.A.S.), 31700 Blagnac (FR)
(72) Inventor: JOY, Joewin, Bristol, BS34 7PA (GB); PATIL, Jitendra, Bristol, BS34 7PA (GB); HEBBAR, Nihal, Bristol, BS34 7PA (GB)
(74) Representative: Farrow, James Anthony

(57) **Abstract**

An aircraft structure configured to be exposed to an ambient airflow which flows over the structure in an airflow direction. The aircraft structure comprises: a first exhaust vent configured to exhaust a first stream of gas into the ambient airflow; and a second exhaust vent configured to exhaust a second stream of gas into the ambient airflow. The first exhaust vent is positioned downstream of the second exhaust vent in the airflow direction, the first exhaust vent is positioned in line with the second exhaust vent relative to the airflow direction, and the first exhaust vent has a larger area than the second exhaust vent.

## Description

### FIELD OF THE INVENTION

The present invention relates to an aircraft structure, a method of cooling a gas (such as engine bleed air) flowing over an aircraft structure, and an anti-icing system for inhibiting accumulation of ice on an aircraft structure.

### BACKGROUND OF THE INVENTION

Engine bleed air based thermal anti-icing systems are widely used in commercial aircraft. Hot air (normally more than 350°C) exits from exhaust vents. In order to withstand such high exit temperatures, a metallic (aluminium) door may be used aft of the exhaust vent instead of fibre-reinforced composite. This door adds weight and increases design and manufacturing complexity.

Known exhaust vent arrangements are disclosed in EP0536089A1, US6427434B2, US 11208952B2 and US5365731A.

### SUMMARY OF THE INVENTION

A first aspect of the invention provides an aircraft structure configured to be exposed to an ambient airflow which flows over the structure in an airflow direction, the aircraft structure comprising: a first exhaust vent configured to exhaust a first stream of gas into the ambient airflow; and a second exhaust vent configured to exhaust a second stream of gas into the ambient airflow, wherein the first exhaust vent is positioned downstream of the second exhaust vent in the airflow direction, the first exhaust vent is positioned in line with the second exhaust vent relative to the airflow direction, and the first exhaust vent has a larger area than the second exhaust vent.

Optionally the first exhaust vent is configured to exhaust the first stream of gas so that the first stream of gas attaches to a surface of the aircraft structure; and the second exhaust vent is configured to exhaust the second stream of gas so that the second stream of gas disrupts the ambient airflow over the aircraft structure to generate a disrupted ambient airflow which mixes with the first stream of gas before the first stream of gas attaches to the surface of the aircraft structure.

Optionally the structure comprises a fibre-reinforced composite material which is positioned downstream of the first exhaust vent relative to the airflow direction so that the first stream of gas heats the fibre-reinforced composite material.

Optionally the aircraft structure comprises a leading edge, and the second exhaust vent is positioned between the leading edge and the first exhaust vent.

Optionally the structure comprises an engine nacelle.

Optionally the aircraft structure further comprises an engine arranged to generate engine bleed air, wherein the first and second stream of gas comprise engine bleed air from the engine.

Optionally the engine comprises a gas turbine with a compressor stage configured to generate compressed air; and a combustion stage configured to receive the compressed air from the compressor stage, wherein the engine bleed air is taken from the compressor stage.

Optionally the first exhaust vent has a shape which tapers inwardly in the airflow direction, so that an upstream half of the first exhaust vent has a larger area than a downstream half of the first exhaust vent.

Optionally the first exhaust vent has a triangular shape which tapers inwardly in the airflow direction.

Optionally the second exhaust vent is diamond shaped.

Optionally the diamond has a long axis and a short axis, and the long axis is perpendicular to the airflow direction.

Optionally the aircraft structure further comprises a cavity, wherein both vents are configured to exhaust gas from the cavity.

Optionally the structure comprises a skin, and the vents are holes in the skin.

Optionally a ratio between the areas of the first and second exhaust vents is greater than 2:1 or greater than 5:1.

A further aspect of the invention provides an aircraft comprising an aircraft structure according to the preceding aspect.

A further aspect of the invention provides a method of cooling gas flowing over an aircraft structure, the method comprising: exhausting a first stream of gas from a first exhaust vent, wherein the first stream of gas attaches to a surface of an aircraft structure; and exhausting a second stream of gas from a second exhaust vent, wherein the second stream of gas disrupts an ambient airflow to generate a disrupted ambient airflow which mixes with the first stream of gas, thereby cooling the first stream of gas before the first stream of gas attaches to the surface of the aircraft structure.

Optionally the first stream of gas has a higher mass flow rate than the second stream of gas.

Optionally the first stream of gas and the second stream of gas comprise engine bleed air generated by a gas turbine engine.

Optionally the first exhaust vent has a larger area than the second exhaust vent.

Optionally the first and second stream of gas have a maximum temperature greater than 200°C or greater than 300°C as they exit each exhaust vent.

Optionally the first stream of gas has a first maximum temperature as it exits the first exhaust vent, and a second maximum temperature where it attaches to the surface of the aircraft structure, and a difference between the first and second maximum temperatures is greater than 100°C or greater than 200°C.

A further aspect of the invention provides an anti-icing system for inhibiting accumulation of ice on an aircraft structure, wherein the aircraft structure is configured to be exposed to an ambient airflow which flows over the structure in an airflow direction, the anti-icing system comprising an exhaust vent configured to exhaust a stream of engine bleed air into the ambient airflow, wherein the exhaust vent has a triangular shape which tapers inwardly in the airflow direction.

### BRIEF DESCRIPTION OF THE DRAWINGS

Embodiments of the invention will now be described with reference to the accompanying drawings, in which:
Figure 1 shows an aircraft;
Figure 2 is a schematic diagram showing main components of an engine of the aircraft of Figure 1;
Figure 3 shows an engine nacelle of the aircraft of Figure 1;
Figure 4 is an enlarged view showing ambient airflow over an array of exhaust vents;
Figure 5A shows a pair of exhaust vents;
Figure 5B shows the exhaust vents of Figure 5A with streams of engine bleed air flowing from the exhaust vents into an ambient airflow;
Figure 6 is a cross-sectional view showing streams of engine bleed air flowing from the exhaust vents without ambient airflow;
Figure 7 is a cross-sectional view showing streams of engine bleed air flowing from the exhaust vents with ambient airflow;
Figure 8A shows an alternative set of exhaust vents;
Figure 8B shows a further alternative set of exhaust vents; and
Figure 8C shows a further alternative set of exhaust vents.

### DETAILED DESCRIPTION OF EMBODIMENT(S)

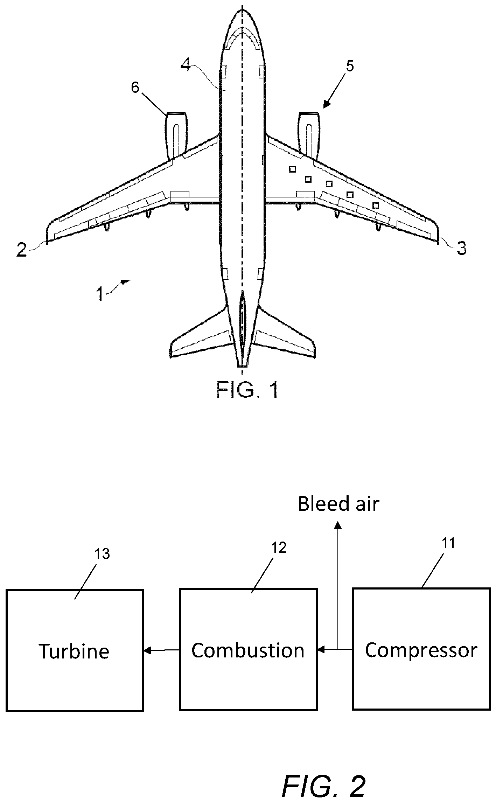

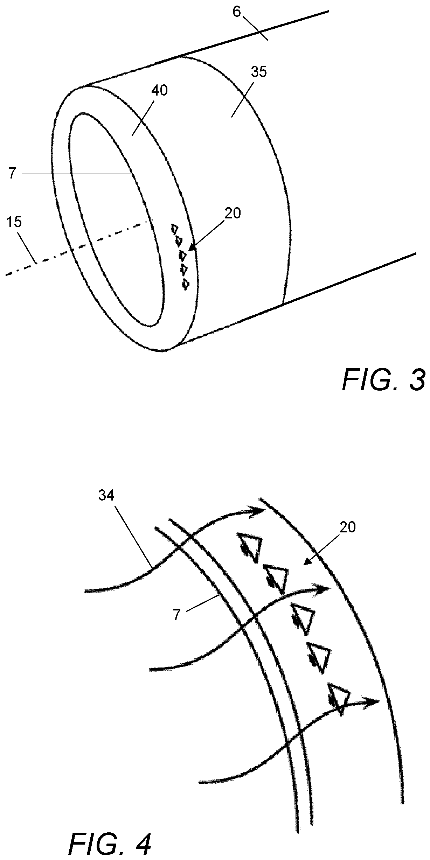

Figure 1 shows an aircraft 1 with a pair of wings 2, 3 extending from a fuselage 4. Each wing carries an engine assembly 5. Each engine assembly 5 comprises an engine surrounded by an engine nacelle 6. Figure 2 is a schematic view of the engine, and Figures 3 and 4 show the front of the engine nacelle 6.

As shown in Figure 2, the engine comprises a gas turbine with a compressor stage 11 configured to generate compressed air; a combustion stage 12 configured to receive the compressed air from the compressor stage; and a compressor-driving turbine 13. The rotating parts of the engine rotate about an engine axis 15 shown in Figure 3.

The engine nacelle 6 has an inlet cowl with a leading edge 7 which can accumulate ice. To inhibit such accumulation of ice, an anti-icing system is provided which takes engine bleed air from the compressor stage 11 as shown in Figure 2, and uses it to heat the leading edge 7 of the engine nacelle 6. This engine bleed air is exhausted from the engine nacelle 6 by an array 20 of exhaust vents shown in Figures 3 and 4. The engine bleed air is hot - potentially over 350°C as it exits the exhaust vents.

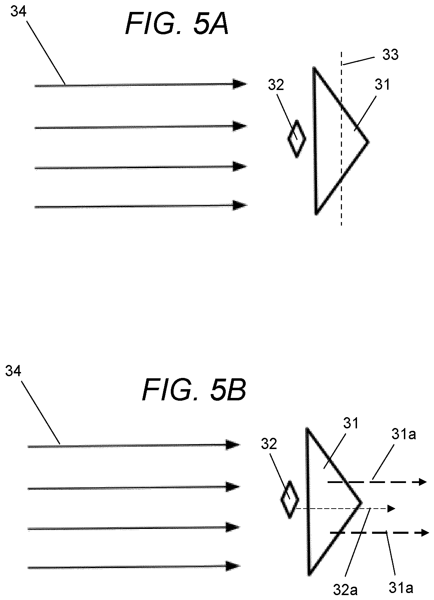

The array 20 of exhaust vents comprises five identical pairs of exhaust vents. One pair is shown in Figures 5A and 5B: a first (triangular) exhaust vent 31 is configured to exhaust a first stream of engine bleed air 31a into the ambient airflow; and a second (diamond) exhaust vent 32 is configured to exhaust a second stream of engine bleed air 32a into the ambient airflow.

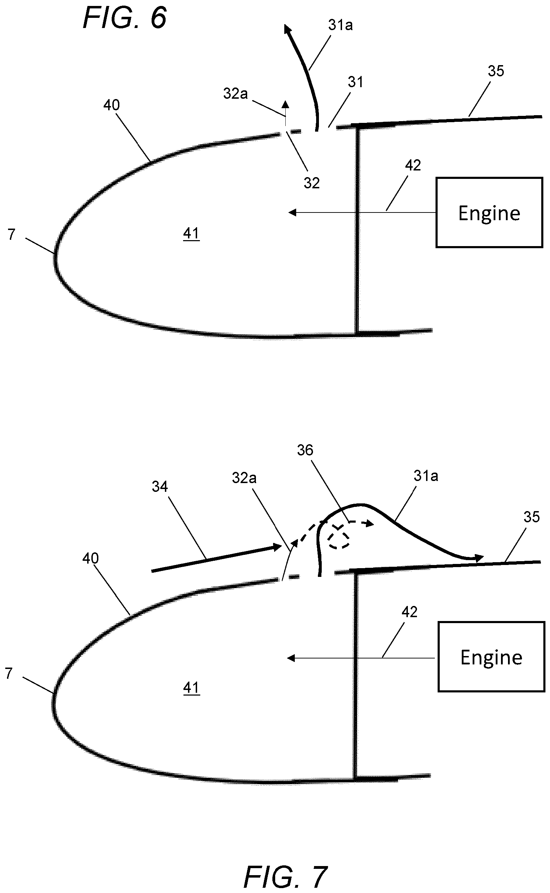

An aluminium lip skin 40 with a cavity 41 shown in Figures 6 and 7 (known as a "D-duct") extends around a full circumference of the leading edge 7 of the engine nacelle. An outer barrel 35 is immediately aft of the lip skin 40. Engine bleed air is fed into the cavity 41 from the engine via a engine bleed air feed duct 42 at high pressure, circulates around the circumference of the cavity 41, and is then exhausted from the cavity 41 via the array 20 of vents 31, 32. The hot engine bleed air in the cavity 41 heats the skin 40 from the inside.

The engine nacelle 6 is exposed to an ambient airflow 34 which flows over the engine nacelle in an airflow direction which is left-to-right in the view of Figures 5A and 5B.

The second exhaust vent 32 is positioned between the leading edge 7 and the first exhaust vent 31. As a result, the first exhaust vent 31 is positioned downstream of the second exhaust vent 32 relative to the airflow direction.

The first exhaust vent 31 has a triangular shape which tapers inwardly in the airflow direction.

The second exhaust vent 32 is diamond shaped.

Figure 6 shows the gas flow from the exhaust vents 31, 32 with no ambient airflow. The first exhaust vent 31 has a triangular shape which tapers inwardly in the airflow direction, so that a trapezoidal upstream half of the first exhaust vent 31 (upstream of a fore-aft midline 33 of the vent) has a larger area than a triangular downstream half of the first exhaust vent 31 (downstream of the fore-aft midline 33). This asymmetry causes the first stream of engine bleed air 31a to steer slightly to the left as shown in Figure 6, towards the wider upstream half of the triangle. This is referred to below as the "steering effect" of the first exhaust vent 31.

When the aircraft in in flight, the engine nacelle 6 is exposed to the ambient airflow 34 which causes the first stream of engine bleed air 31a to veer to the right before it attaches to the outer barrel 35 as shown in Figure 7. This outer barrel 35 is positioned downstream of the first exhaust vent 31 relative to the airflow direction, and comprises a fibre-reinforced composite material which is heated by the first stream of engine bleed air 31a and can be damaged by the high temperature.

The second stream of engine bleed air 32a decelerates and disrupts the ambient airflow 34 to generate a disrupted and turbulent ambient airflow 36 shown in Figure 7. This disrupted ambient airflow 36 mixes with the first stream of engine bleed air 31a, thereby cooling the first stream of engine bleed air 31a before it attaches to the surface of the outer barrel 35. This reduces the risk of thermal damage to the outer barrel 35.

Analysis of the vent arrangement of Figure 5A has demonstrated a cooling effect which results in a maximum temperature of the order of 70°C where the first stream of engine bleed air 31a attaches to the outer barrel 35. Hence the first stream of engine bleed air 31a has a first maximum temperature of about 350°C as it exits the first exhaust vent 31, a second maximum temperature of about 70°C where it attaches to the outer barrel 35, and a difference between the first and second maximum temperatures of about 280°C. The fibre-reinforced composite material of the outer barrel 35 can be damaged by temperatures above about 120°C, so the amount of cooling is sufficient. In this case the amount of cooling is about 280°C, but in other embodiments the amount of cooling may be lower.

The first exhaust vent 31 has a larger area than the second exhaust vent 32, and as a result the first stream of engine bleed air 31a has a higher mass flow rate than the second stream of engine bleed air 32a. An "area" of an exhaust vent is used herein to refer to a cross-sectional area of the exhaust vent transverse to the direction of flow of the stream of gas through the exhaust vent (which is referred to below as the "vent flow direction"). **In** this case the engine nacelle 6 comprises a thin skin 40 (typically about 3mm thick) and each exhaust vent 31, 32 is a hole in the skin 40. Hence each exhaust vent 31, 32 has minimal length in the vent flow direction and the area of the exhaust vent 31, 32 does not vary in the vent flow direction.

**In** other embodiments in which the exhaust vents have an area which varies in the vent flow direction, then the minimum area of the first exhaust vent is greater than the minimum area of the second exhaust vent.

The purpose of the first exhaust vent 31 is to exhaust engine bleed air from the cavity 41 at a high mass flow rate. Hence the first exhaust vent 31 has a relatively large area.

The second exhaust vent 32 has a different purpose: to generate a disrupted ambient airflow 36 with a large cooling effect. It has been found that a large cooling effect can be achieved with a relatively small second exhaust vent 32. The relatively small area results in low aerodynamic drag. Aerodynamic drag is also minimized by using the second stream of engine bleed air 32a to disrupt the ambient airflow 34, rather than using a protrusion into the ambient airflow 34.

The ratio between the areas of the exhaust vents 31, 32 is of the order of 12:1 but this ratio may be lower or higher. Typically the ratio is greater than 2:1 or greater than 5:1.

The symmetrical diamond shape of the second exhaust vent 32 ensures that the second stream of engine bleed air 32a does not veer to the left in Figure 6, and impacts the incoming ambient airflow 34 at a high angle.

The diamond shape of the second exhaust vent 32 creates a higher flow velocity decay than other shapes (such as a triangle, circle or rectangle) and as a consequence the second stream of engine bleed air 32a interacts very efficiently with the ambient airflow 34.

The diamond shape has a long axis and a short axis, and the long axis is preferably perpendicular to the airflow direction. This maximizes the disruption of the ambient airflow 34.

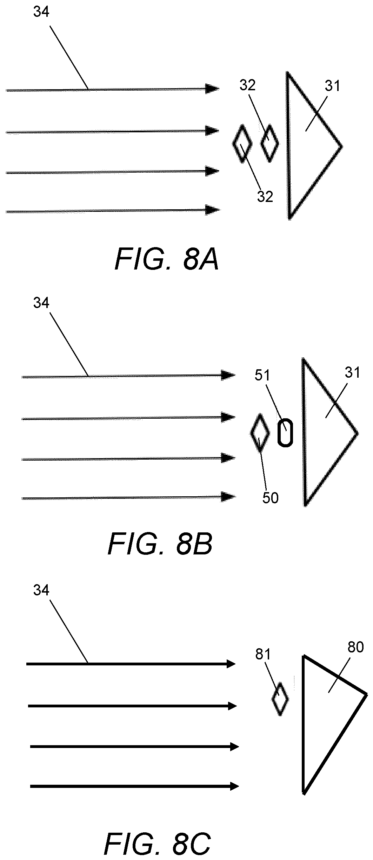

Figures 8A-C show three alternative exhaust vent arrangements.

In Figure 8A there are two second diamond-shaped exhaust vents 32 upstream of the first exhaust vent 31.

In Figure 8B there are also two second exhaust vents upstream of the first exhaust vent 31: one 50 being diamond-shaped the other 51 being lozenge or stadium-shaped.

Where there is more than one second exhaust vent upstream of the first exhaust vent 31 (as in Figures 8A and 8B) then the first exhaust vent 31 has a larger area than each second exhaust vent, and the first exhaust vent 31 has a larger area than the sum of the areas of the second exhaust vents.

In Figure 8C the first exhaust vent 80 has an asymmetrical triangular shape, with the second exhaust vent 81 positioned in line with the apex of the triangle.

In all cases, the first exhaust vent 31, 80 is positioned downstream of the second exhaust vent(s) in to the airflow direction, and in line with the second exhaust vent 32, 50, 51, 81 relative to the airflow direction. As a result, the second stream of engine bleed air from the (or each) second exhaust vent flows over the first exhaust vent as shown in Figure 5B by way of example.

The (or each) second exhaust vent may be positioned symmetrically and centrally in line with the apex of the triangle, relative to the airflow direction, as in Figures 5A, 8A and 8B. In other embodiments, the second exhaust vent may be offset from the centre of the triangle (as in Figure 8C) as long as it remains in line with some part of the first exhaust vent 80 so that the second stream of engine bleed air flows over the first exhaust vent 80, thereby providing the desired cooling effect.

The steering effect of the first exhaust vent 31, 80 causes the first stream of engine bleed air 31a to attach to the panel further aft than it would in the absence of the steering effect. This gives more time for the disrupted ambient airflow 36 to mix with the first stream of engine bleed air 31a and hence provides an enhanced cooling effect.

The steering effect is caused by the triangular shape of the first exhaust vent 31, 80 but a similar steering effect may be obtained by other shapes (for example trapezoidal or teardrop-shaped) which taper inwardly in the airflow direction, so that an upstream half of the first exhaust vent 31 has a larger area than a downstream half of the first exhaust vent 31.

In the embodiments above, the first exhaust vent 31, 80 has a triangular shape which tapers inwardly in the airflow direction. As noted above, this causes a steering effect, which in turn gives more time for the disrupted ambient airflow 36 to cool before attaching to the aircraft structure. In alternative embodiments of the invention, the second exhaust vent may have the same area as the triangular first exhaust vent, or a larger area than the triangular first exhaust vent.

The steering effect of a triangular exhaust vent is also advantageous in the absence of a second exhaust vent. Hence in other embodiments of the invention, there may be no second exhaust vent upstream of the triangular exhaust vent 31, 80.

In the embodiments above, the anti-icing system is applied to an engine nacelle 6. In other embodiments of the invention, the anti-icing system may be applied to another aircraft structure such as a leading edge of a wing 2,3.

In the embodiments above, the streams of gas 31a, 32a from the exhaust vents are engine bleed air. In other embodiments of the invention, the streams of gas may be a hot gas (i.e. hotter than the ambient airflow) from another source. Typically each stream of gas has a maximum temperature greater than 200°C or greater than 300°C as it exits the exhaust vent.

Where the word 'or' appears this is to be construed to mean 'and/or' such that items referred to are not necessarily mutually exclusive and may be used in any appropriate combination.

Although the invention has been described above with reference to one or more preferred embodiments, it will be appreciated that various changes or modifications may be made without departing from the scope of the invention as defined in the appended claims.

## Claims

1. An aircraft structure configured to be exposed to an ambient airflow which flows over the structure in an airflow direction, the aircraft structure comprising: a first exhaust vent configured to exhaust a first stream of gas into the ambient airflow; and a second exhaust vent configured to exhaust a second stream of gas into the ambient airflow, wherein the first exhaust vent is positioned downstream of the second exhaust vent in the airflow direction, the first exhaust vent is positioned in line with the second exhaust vent relative to the airflow direction, and the first exhaust vent has a larger area than the second exhaust vent.

2. An aircraft structure according to claim 1, wherein the first exhaust vent is configured to exhaust the first stream of gas so that the first stream of gas attaches to a surface of the aircraft structure; and the second exhaust vent is configured to exhaust the second stream of gas so that the second stream of gas disrupts the ambient airflow over the aircraft structure to generate a disrupted ambient airflow which mixes with the first stream of gas before the first stream of gas attaches to the surface of the aircraft structure.

3. An aircraft structure according to any preceding claim, wherein the structure comprises a fibre-reinforced composite material which is positioned downstream of the first exhaust vent relative to the airflow direction so that the first stream of gas heats the fibre-reinforced composite material.

4. An aircraft structure according to any preceding claim, wherein the aircraft structure comprises a leading edge, and the second exhaust vent is positioned between the leading edge and the first exhaust vent.

5. An aircraft structure according to any preceding claim, wherein the aircraft structure comprises an engine nacelle.

6. An aircraft structure according to any preceding claim further comprising an engine arranged to generate engine bleed air, wherein the first and second stream of gas comprise engine bleed air from the engine, optionally wherein the engine comprises a gas turbine with a compressor stage configured to generate compressed air; and a combustion stage configured to receive the compressed air from the compressor stage, wherein the engine bleed air is taken from the compressor stage.

7. An aircraft structure according to any preceding claim, wherein the first exhaust vent has a shape which tapers inwardly in the airflow direction, so that an upstream half of the first exhaust vent has a larger area than a downstream half of the first exhaust vent.

8. An aircraft structure according to any preceding claim, wherein the first exhaust vent has a triangular shape which tapers inwardly in the airflow direction.

9. An aircraft structure according to any preceding claim, wherein the second exhaust vent is diamond shaped, optionally wherein the diamond has a long axis and a short axis, and the long axis is perpendicular to the airflow direction.

10. An aircraft structure according to any preceding claim further comprising a cavity, wherein both vents are configured to exhaust gas from the cavity.

11. An aircraft structure according to any preceding claim, wherein the structure comprises a skin, and the vents are holes in the skin.

12. An aircraft structure according to any preceding claim, wherein a ratio between the areas of the first and second exhaust vents is greater than 2:1.

13. An aircraft comprising an aircraft structure according to any preceding claim.

14. A method of cooling gas flowing over an aircraft structure, the method comprising: exhausting a first stream of gas from a first exhaust vent, wherein the first stream of gas attaches to a surface of an aircraft structure; and exhausting a second stream of gas from a second exhaust vent, wherein the second stream of gas disrupts an ambient airflow to generate a disrupted ambient airflow which mixes with the first stream of gas, thereby cooling the first stream of gas before the first stream of gas attaches to the surface of the aircraft structure.

15. A method according to claim 14, wherein at least one of:
the first stream of gas has a higher mass flow rate than the second stream of gas;
the first stream of gas and the second stream of gas comprise engine bleed air generated by a gas turbine engine;
the first exhaust vent has a larger area than the second exhaust vent;
the first and second stream of gas have a maximum temperature greater than 200°C or greater than 300°C as they exit each exhaust vent; and
the first stream of gas has a first maximum temperature as it exits the first exhaust vent, and a second maximum temperature where it attaches to the surface of the aircraft structure, and a difference between the first and second maximum temperatures is greater than 100°C or greater than 200°C.
